# DEMANDE DE BREVET EUROPEEN

(11) **EP 2 800 017 A2**
(43) Date de publication de la demande: **05.11.2014**
(21) Numéro de dépôt: 14165218.0
(22) Date de dépôt: 17.04.2014
(51) Int. Cl.: G06F 17/30

(54) **Génération d'un document sonore personnalisé relatif à un évènement**

(30) Priorité: 30.04.2013 FR 1353955
(71) Demandeur: Orange, 75015 Paris (FR)
(72) Inventeur: Roulliere, Stephane, 35000 Rennes (FR); Heau, Tristan, 61210 Bazoches au Houlme (FR); Doisy, Nicolas, 35000 Rennes (FR); Barthe, Nicolas, 14210 Esquay Notre Dame (FR)

(57) **Abrégé**

L'invention concerne une génération d'un document sonore personnalisé relatif à un évènement, en particulier la génération d'une bande son d'un festival de musique tel que vécu par un participant. Notamment, cette bande son est adaptée pour sonoriser un document multimédia personnalisé généré relativement à cet évènement.

Un objet de l'invention est un procédé de génération, sur requête d'un utilisateur, d'un document sonore personnalisé relatif à un évènement lors duquel une série de données multimédia est générée pour ledit utilisateur. Le procédé de génération comporte
- Une récupération, pour chaque données multimédia de la série de données multimédia dudit utilisateur requérant ladite génération d'un document sonore personnalisé, d'au moins une adresse de streaming audio en fonction d'au moins une première information de contexte associée à une série de données multimédia, et
- Un mixage des contenus audio desdites adresses de streaming audio récupérées , ledit mixage fournissant ledit document sonore personnalisé.

Ainsi le document sonore ne comportera que des adresses de streaming audio relatifs à l'évènement tel que vécu par l'utilisateur requérant sa génération en utilisant uniquement les informations de contexte relative à l'évènement qui sont associées aux données multimédia de l'utilisateur requérant.

## Description

L'invention concerne une génération d'un document sonore personnalisé relatif à un évènement, en particulier la génération d'une bande son d'un festival de musique tel que vécu par un participant. Notamment, cette bande son est adaptée pour sonoriser un document multimédia personnalisé généré relativement à cet évènement.

Lors d'un évènement, des données multimédia (contenus multimédia tels que photos, vidéos, etc., mais aussi des données de communications tels que des messages textuels : tweets, chat, SMS, message instantané, etc.) sont massivement capturés et/ou générés par des utilisateurs au moyen de périphériques de capture, de terminaux de communication, etc.

Pour revivre le déroulement de cet évènement et le partager avec d'autres personnes, il existe plusieurs mises en forme possibles des contenus multimédias. Notamment, le diaporama (ou slideshow en anglais) est une mise en forme de contenus multimédia efficace et ludique dont la réalisation demeure néanmoins couteuse et problématique à plusieurs égards.

La prise en compte de différentes sources de contenus (contenus de l'utilisateur et contenus d'autres personnes ayant participé au même évènement) est particulièrement complexe car non seulement elle augmente de manière exponentielle l'investissement personnel de l'utilisateur notamment le temps consacré à la création du diaporama, mais en plus l'utilisateur peut se heurter à des problèmes d'accès aux contenus des autres participants : soit simplement parce qu'il ne connait pas toutes les personnes ayant participé à l'évènement, pour des questions de formats des contenus, mais aussi pour des questions de droits d'accès aux contenus.

La non-connaissance par l'utilisateur des informations de contexte des contenus soit par oubli ou parce que les contenus proviennent d'autres participants, ou la difficulté d'exploitation de ces informations de contexte présentes dans les métadonnées de certains contenus pour un utilisateur novice pose problème dans l'agencement des contenus. En outre, cela limite le nombre et la pertinence des informations de contextualisation dans le diaporama, ne permettant pas aux personnes à qui sont présenté un tel diaporama de replace dans leur contexte les photos affichées. Cette limite est d'autant plus marquée dans le cas de diaporamas mettant en commun des photos prises par plusieurs participants.

Aujourd'hui la sélection et la génération d'une bande son, notamment lors de la génération d'un tel diaporama relatif à un évènement, est une étape arbitraire décorrélée du déroulement de l'évènement vécu alors que de la musique peut être diffusée pendant cet évènement, en particulier lors de concerts, de festivals de musique...

Un des buts de la présente invention est de remédier à des inconvénients/insuffisances de l'état de la technique/ d'apporter des améliorations par rapport à l'état de la technique.

Un objet de l'invention est un procédé de génération, sur requête d'un utilisateur, d'un document sonore personnalisé relatif à un évènement lors duquel une série de données multimédia est générée pour ledit utilisateur. Le procédé de génération comporte
- Une récupération, pour chaque donnée multimédia d'une série de données multimédia d'un utilisateur, d'au moins une adresse de streaming audio en fonction d'au moins une première information de contexte associée à ladite série de données multimédia d'un utilisateur requérant ladite génération d'un document sonore, et
- Un mixage des contenus audio desdites adresses de streaming audio récupérées , ledit mixage fournissant ledit document sonore personnalisé.

Ainsi le document sonore ne comportera que des éléments sonores relatifs à l'évènement tel que vécu par l'utilisateur requérant sa génération en utilisant uniquement les informations de contexte relative à l'évènement qui sont associées aux données multimédia de l'utilisateur requérant.

Avantageusement, la première information de contexte est identifiée en fonction d'au moins une donnée multimédia dudit utilisateur requérant, ladite première information de contexte est associée à des données multimédia de l'utilisateur requérant, les données multimédia associée à une même première information de contexte constituant une série.

Ainsi, la première information de contexte est :
- soit une information de contexte fournie par une source autre que l'utilisateur requérant et associée aux données multimédia de l'utilisateur requérant préalablement la récupération des adresses de streaming audio ,
- soit une information de contexte obtenue par reconnaissance à partir de la donnée multimédia, notamment reconnaissance visuelle d'un artiste dans une donnée multimédia de type photo ou vidéo, reconnaissance musicale d'un nom d'artiste, d'un titre de chanson à partir d'une donnée multimédia de type audio ou vidéo, etc.

Avantageusement, l'identification de la première information de contexte comporte une reconnaissance d'information de contexte dans ladite donnée multimédia.

Ainsi, la contextualisation de l'évènement ne nécessite pas l'utilisation d'une source maintenant des informations de contexte, cela est intéressant en particulier lors d'évènement privé ou d'évènement comportant une part d'improvisation pour lesquels une base de données de contexte comportant des informations de contexte d'une source ne pourra pas être fournie avant l'évènement et ne pourra être complète qu'une fois l'évènement terminé

Avantageusement, la récupération d'une adresse de streaming audio est effectué dans les informations de contexte associées à la dite série et fournies par une source de données multimédia.

Ainsi, l'adresse de streaming audio est facilement récupérable puisque situé dans la même base de données que les informations de contexte. Cela évite les erreurs de récupération et réduit les échanges nécessaires pour la récupération.

Avantageusement, la récupération d'une adresse de streaming audio est effectuée dans une base de données d'adresses de streaming audio .

Ainsi, la base de données d'information de contexte n'est pas surchargée par des adresses de streaming audio . En outre, l'utilisation d'une base de données d'adresses de streaming audio permet d'affiner la personnalisation du document sonore car, si la base de données de contexte comporte un ou plusieurs adresses de streaming audio pour chacun des contextes de l'évènement, elle comporte rarement tout les adresses de streaming audio pour tout les contextes notamment tout les morceaux joués par un groupe lors d'un concert, alors qu'une base de données d'adresses de streaming audio adresses de streaming audio comporte généralement toutes ces adresses de streaming audio adresse de streaming audio voir plusieurs versions d'une même adresse de streaming audio (le même morceaux musical en version studio, live, acoustique, etc.) Le document sonore récupèrera, par exemple, l'adresse de streaming audio live lors d'un festival, l'adresse de streaming audio acoustique lors d'un concert acoustique, l'adresse de streaming audio studio lors d'un évènement privé.

Avantageusement, le procédé de génération comporte, préalablement au mixage, une sélection, pour au moins une série, d'au moins une adresse de streaming audio parmi les adresses de streaming audio récupérés.

Ainsi, lorsque le volume d'adresses de streaming audio récupérées est important, le document sonore généré comportera au moins une adresse de streaming audio pour refléter chaque série.

Avantageusement, la sélection d'une adresse de streaming audio est fonction d'au moins une deuxième information de contexte.

Ainsi, si la récupération des adresses de streaming audio a été faite sur une première information de contexte, la sélection permettra de sélection en fonction d'une deuxième information de contexte : par exemple récupération des adresses de streaming audio associés à un artiste, sélection en fonction de l'album, ou récupération des adresses de streaming audio d'un album, sélection en fonction du type d'enregistrement (live, acoustique, etc.)...

Avantageusement, la sélection d'une adresse de streaming audio est fonction d'au moins une donnée multimédia de ladite série.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de génération de document sonore personnalisé et étant conçus pour commander l'exécution des différentes étapes de ce procédé.

L'invention vise donc aussi un programme comprenant des instructions de code de programme pour l'exécution des étapes du procédé de génération d'un document sonore personnalisé lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un procédé de génération d'un document multimédia personnalisé sonorisé relatif à un évènement à partir de données multimédia de plusieurs sources, comportant une génération d'une bande sonore dudit document multimédia personnalisé.

Avantageusement, le procédé de génération d'un document multimédia personnalisés sonorisé comporte une sélection de données multimédia concernant ledit évènement en fonction d'une distance composite associée auxdites données multimédia, ladite distance composite étant relative à au moins une donnée multimédia d'une source de référence et fonction de plusieurs distances de type différents.

Ainsi, le document multimédia personnalisé généré ne comportera que des données multimédia relatives à l'évènement tel que vécu par l'utilisateur requérant sa génération. En effet, l'utilisation d'une distance composite pour la sélection de données multimédia permet d'affiner cette sélection.

Ainsi, le dispositif générant le document multimédia personnalisé nécessitera moins de capacité de mémorisation pour les documents multimédia car le procédé de génération permettra d'obtenir un document multimédia contenant moins de données multimédia que lorsque la sélection est faite par un utilisateur d'autant plus si que le nombre de sources de données multimédia est important.

En outre, le procédé de génération selon l'invention permettra de réduire l'investissement d'un utilisateur lors de la génération d'un document multimédia personnalisé. Ainsi, la capacité mémoire utilisée par un utilisateur pour stocker des données multimédia relative à un évènement pourra se limiter à la capacité du document multimédia personnalisé ainsi généré plutôt qu'à la capacité nécessaire pour stocker les contenus multimédias de cet utilisateur plus les contenus d'autres participants (sans réelle sélection de la part de l'utilisateur).

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif de génération de document multimédia personnalisé sonorisé et étant conçus pour commander l'exécution des différentes étapes de ce procédé.

L'invention vise donc aussi un programme comprenant des instructions de code de programme pour l'exécution des étapes du procédé de génération d'un document multimédia personnalisé sonorisé lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un dispositif de génération d'un document sonore personnalisé relatif à un évènement comportant
- un récupérateur, pour chaque série de donnée multimédia, d'au moins une adresse de streaming audio en fonction d'au moins une première information de contexte associée à une série de données multimédia d'un utilisateur requérant ladite génération d'un document sonore, et
- un mixeur des contenus audio desdites adresses de streaming audio récupérées , ledit mixeur fournissant ledit document sonore personnalisé.

Un objet de l'invention est en outre un dispositif de génération d'un document multimédia personnalisé sonorisé relatif à un évènement à partir de données multimédia de plusieurs sources comportant un dispositif de génération d'un document sonore personnalisé relatif à un évènement.

Avantageusement, ledit dispositif de génération de document multimédia comporte un sélecteur de données multimédia en fonction d'une distance *composite* associée auxdites données multimédia, ladite distance composite étant relative à au moins une donnée multimédia d'une source de référence et fonction de plusieurs distances de type différents.

Les caractéristiques et avantages de l'invention apparaîtront plus clairement à la lecture de la description, faite à titre d'exemple, et des figures s'y rapportant qui représentent :
- Figure 1, un schéma simplifié de procédé de génération de document sonore personnalisé selon l'invention,
- Figure 2, un schéma simplifié de procédé de génération de document multimédia personnalisé selon l'invention,
- Figures 3a et 3b, des schémas simplifiés d'une architecture réseau comportant respectivement un dispositif de génération de document sonore personnalisé selon l'invention, et un dispositif de génération de document multimédia personnalisé sonorisé selon l'invention
- Figure 4, un exemple de document multimédia personnalisé sonorisé selon l'invention,

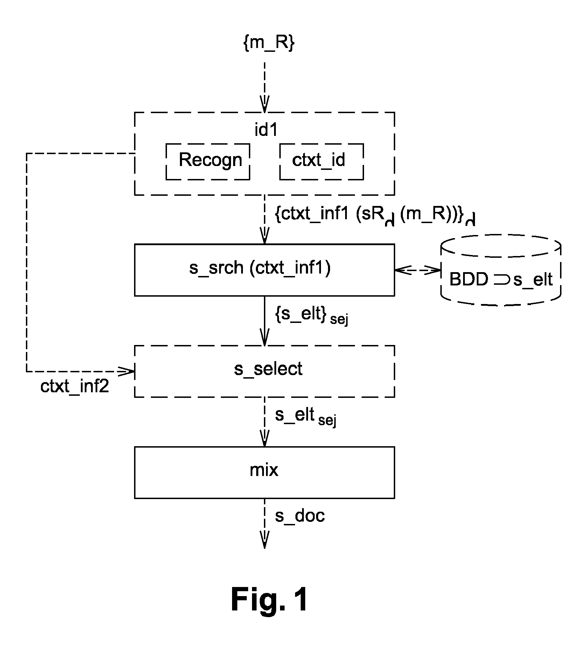

La figure 1 illustre un schéma simplifié de procédé de génération de document sonore personnalisé selon l'invention.

Le procédé de génération, sur requête d'un utilisateur, d'un document sonore personnalisé relatif à un évènement lors duquel une série de données multimédia est générée pour ledit utilisateur, comporte :
- Une récupération *s_srch,* pour chaque données multimédia de la série de données multimédia dudit utilisateur requérant ladite génération d'un document sonore personnalisé, d'au moins une adresse de streaming audio *s_elt* en fonction d'au moins une première information de contexte *ctxt_inf1* associée à une série *se_{λ}* de données multimédia {m__{R}}, et
- Un mixage *mix* dudit contenu audio desdites adresses de streaming audio récupérées s_*elt_{seλ}*, ledit mixage fournissant ledit document sonore personnalisé *s_doc.*

Par adresse de streaming audio est entendu, une adresse de streaming audio vers un morceau de musique, une chanson, un discours, une lecture, etc. Ce morceau de musique, chanson, discours...peut être fourni sous forme segmentée ou non, tels que : intro, couplet, refrain, pour une chanson ; prologue, chapitre, épilogue pour une lecture ; strophes d'une lecture d'un poème. etc. L'adresse de streaming audio peut être fourni par un fournisseur de contenu audio ou être enregistré durant l'évènement soit par l'utilisateur requérant soit par une autre source (officielle ou autre participant). L'adresse de streaming audio d'un fichier sonoreenregistré durant l'évènement, voire le fichier sonore lui-même est notamment associé à des données de localisation et à un instant d'enregistrement.

En particulier, le mixage consiste à intégrer l'adresse de streaming audio au document sonore personnalisé avec ou sans contraintes sur les paramètres de reproduction permettant une reproduction des contenus audio streamés par les adresses de streaming audio intégré dans le document sonore personnalisé, Ainsi, le document sonore résultant consistera, notamment, en une liste des adresses mixées aux documents sonores avec ou sans paramètres de reproduction associées (en fonction des contraintes). Les contraintes sont notamment
- une modification d'un paramètre (notamment du volume sonore, tel que l'augmentation ou la diminution) de reproduction,
- une relecture de l'adresse de streaming audio, un ordre de mixage soit aléatoire soit fonction d'un ordre donné par la récupération et/ou la sélection,
- un enchainement des adresses de streaming audio selon des paramètres de mixage définissable en amont du processus notamment mode et vitesse de transition d'une adresse de streaming audio à l'adresse de streaming audio suivant.

Ainsi, le document sonore personnalisé constitue une liste de lecture ou liste de reproduction d'éléments sonores (tels que des contenus audio) pointant chacun une adresse de streaming audio, aussi nommée playlist en anglais. La liste de lecture comporte alors au moins une liste des adresses de streaming audio récupérées.

L'évènement est un évènement réel ou virtuel, à savoir un festival, un concert, vécu respectivement physiquement ou via une diffusion de contenu (notamment via un site de fourniture de contenus audio tel que Deezer, via un site de fourniture de monde virtuel, tel que Second Life, etc.). Par évènement virtuel est aussi entendu, l'accès des contenus (site internet, jeux en ligne, pages de réseaux sociaux, vidéo à la demande VOD, etc.) proposant un contexte audio dans ou en plus du ou des contenus fournis. Ainsi, l'invention permet de générer une playlist des musiques entendu lors d'une partie d'un en ligne par exemple.

En particulier, la première information de contexte *ctxt_inf1* est identifiée *id1* en fonction d'au moins une donnée multimédia m__{R} dudit utilisateur requérant. La première information de contexte *ctxt_inf1* est associée à des données multimédia m__{R} de l'utilisateur requérant, les données multimédia associée à une même première information de contexte constituant une série se.

En particulier, l'identification *id1* de la première information de contexte comporte une reconnaissance *recogn* d'information de contexte dans ladite donnée multimédia m__{R}.

De manière alternative ou complémentaire, l'identification id1 est une identification de contextes *ctxt_id* d'un évènement à partir d'informations de contexte fournies par une source de données multimédia, aussi appelées source de contexte, par exemple une base de données multimédia de l'organisateur de l'évènement ou une source officielle de l'évènement.

Chaque donnée multimédia est notamment contextualisée en fonction des informations de contexte (notamment, dans le cadre d'un festival de musique, nom d'artiste, nom de scène, horaires de début et/ou de fin d'un concert, etc.) disponibles auprès de cette source et des informations déjà associés (par exemple sous forme de métadonnées incluant ou non la distance composite) à cette donnée multimédia. Dans notre exemple, à chaque changement de scène correspond un nouveau contexte, ainsi les informations associées à une donnée multimédia de l'utilisateur requérant permettront d'associer un contexte différent de celui de la donnée multimédia précédente de l'utilisateur requérant.

En particulier, la récupération d'une adresse de streaming audio *s_srch* est effectué dans les informations de contexte associées à la dite série se et fournies par une source de données multimédia. En particulier, les informations de contexte comportent soit un lien vers, soit une adresse d'au moins une adresse de streaming audio stocké soit dans cette source de donnée multimédia aussi appelée source de contexte, soit dans une base de données d'adresses de streaming audio , etc.

En particulier, la récupération d'une adresse de streaming audio *s_srch* est effectuée dans une base de données d'adresses de streaming audio . Par exemple, les informations de contexte indique un nom d'artiste ou l'utilisateur requérant enregistre un moment d'un concert permettant de détecter seul ou en corrélation avec la programmation du concert et/ou du festival un nom d'artiste et/ou l'intitulé du morceau constituant alors les informations de contexte permettant de récupérer une adresse de streaming audio , tel que le morceau complet (avec une meilleure qualité sonore) dont l'utilisateur a enregistré un extrait lors du concert, en fonction de ces informations de contexte dans une base de données d'adresses de streaming audio tels que celles de fournisseur de services musicaux, par exemple Deezer, Virgin, etc.

En particulier, préalablement au mixage *mix,* le procédé de génération de document sonore personnalisé comporte une sélection *s_select,* pour au moins une série seλ, d'au moins une adresse de streaming audio s_elt_{seλ} parmi les adresses de streaming audio récupérés {s_elt}_{seλ}.

En particulier, la sélection d'une adresse de streaming audio *s_select* est fonction d'au moins une deuxième information de contexte *ctxt_inf2.*

En particulier, la sélection d'une adresse de streaming audio *s_select* est fonction d'au moins une donnée multimédia de ladite série m__{R seλ}.

La sélection d'une adresse de streaming audio *s_select* comporte par exemple la sélection d'un segment d'une adresse de streaming audio en fonction de la durée de l'adresse de streaming audio et de la durée de la série pour laquelle l'adresse de streaming audio est sélectionné. Ainsi pour éviter la génération d'un document sonore trop volumineux, certain adresse de streaming audio ne sont pas intégré entièrement dans le document sonore personnalisé mais seulement en partie.

La sélection d'un segment est effectuée par exemple en fonction de la deuxième information de contexte *ctxt_inf2*: en particulier, si l'utilisateur a émis un avis d'appréciation à un moment correspondant, par estimation à partir de la programmation fournie par une source officielle, à un couplet particulier d'une chanson, c'est le segment correspondant à ce couplet dans l'adresse de streaming audio qui sera sélectionné.

De manière plus simple, par défaut, la sélection d'un segment d'une adresse de streaming audio constitué par une chanson peut être son refrain, et/ou la sélection d'une adresse de streaming audio quelconque peut être son premier segment, etc.

En particulier, préalablement à ladite récupération, une première information de contexte est identifiée dans des informations de contexte fournies par une source de données multimédia relatives audit évènement, ladite première information de contexte est associée à des données multimédia de l'utilisateur requérant, les données multimédia associée à une même première information de contexte constituant une série.

En particulier, le mixage comporte la modification d'un paramètre (notamment du volume sonore, tel que l'augmentation ou la diminution) de reproduction d'un contenu audio fournie par l'adresse de streaming audio à au moins une des extrémités dudit contenu audion, un contenu audio fourni par une adresse de streaming audio étant constitué de deux extrémités : début et fin du contenu audion de l'adresse de streaming audio soit déterminer par segmentation du contenu audio de l'adresse de streaming audio (le premier et le dernier segment constituant alors respectivement le début et la fin de l'adresse de streaming audio), la segmentation pouvant être une segmentation prédéterminé (en fonction d'un algorithme prédéfini notamment chaque segment ayant une durée prédéterminée ou chaque segment constituant un/nième de l'adresse de streaming audio en terme de durée, ou une segmentation en trois de l'adresse de streaming audio avec les segments des deux extrémités ayant une durée prédéterminée ou constituant un/nième de l'adresse de streaming audio en terme de durée, etc.)

Ainsi la transition d'un contenu audio fourni par une 'une adresse de streaming audio à un autre se fera de manière douce.

Notamment, le mixage comporte une spatialisation des contenus audio fournis par les adresses de streaming audio en fonction des métadonnées associées à ces adresses de streaming audio tels que les données de localisation (gps/boussole).

Ainsi, la reproduction sonore sera fonction du vécu, notamment la reproduction d'un morceau de musique d'un concert sera spatialisé pour donner l'impression d'être positionné à gauche si l'utilisateur requérant était à gauche de la scène pendant le concert, la reproduction d'une phrase enregistrée sera spatialisé pour donner l'impression d'être position à droit si l'utilisateur requérant était positionné à droite du copain qui a prononcé cette phrase, etc.

Une mode de réalisation de ce procédé est un programme comprenant des instructions de code de programme pour l'exécution des étapes du procédé de génération d'un document sonore personnalisé lorsque ledit programme est exécuté par un processeur.

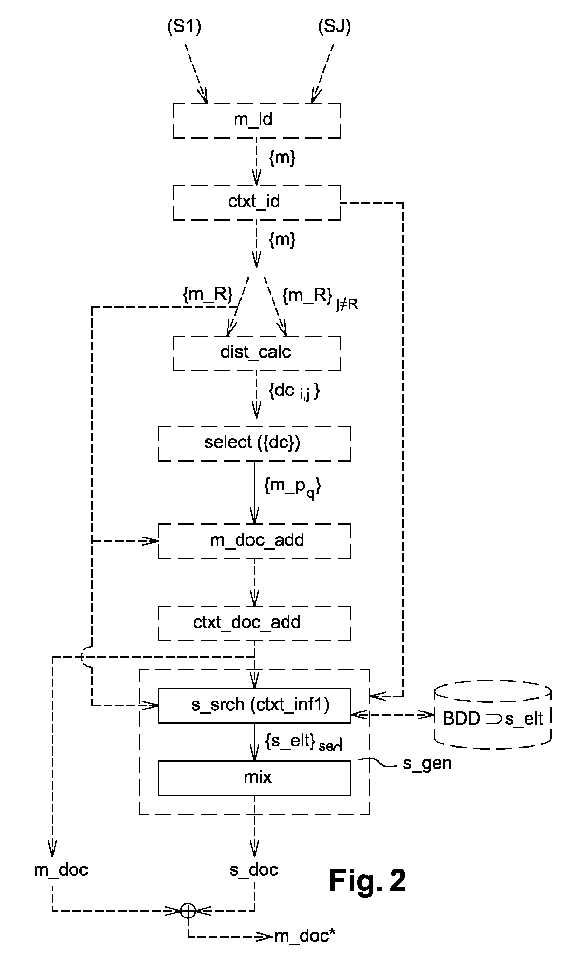

La figure 2 illustre un schéma simplifié de procédé de génération de document multimédia personnalisé selon l'invention.

Le procédé de génération d'un document multimédia personnalisé sonorisé relatif à un évènement à partir de données multimédia de plusieurs sources, comportant une génération *s*_*gen* d'une bande sonore dudit document multimédia personnalisé.

La génération *s_gen* d'un document sonore personnalisé relatif à un évènement comporte :
- Une récupération *s_srch,* pour chaque données multimédia de la série de données multimédia dudit utilisateur requérant ladite génération d'un document sonore personnalisé, d'au moins une adresse de streaming audio *s_elt* en fonction d'au moins une première information de contexte *ctxt_inf1* associée à une série *se*_{λ} de données multimédia {m__{R}}, et
- Un mixage *mix* dudit adresses de streaming audio récupérées *s_elt_{seλ},* ledit mixage fournissant ledit document sonore personnalisé *s_doc.*

En particulier le procédé de génération d'un document multimédia personnalisés sonorisé comporte une sélection *select* de données multimédia concernant ledit évènement en fonction d'une distance composite *dc* associée auxdites données multimédia *m.* La distance composite dc est relative à au moins une donnée multimédia d'une source de référence *mr* et fonction de plusieurs distances de type différents *dₗ*.

Par données multimédia sont entendus notamment des contenus capturés par une ou plusieurs sources : photos, vidéos, etc. mais aussi des données de communications telles que des messages instantanés, tweets, et autres commentaires déposés par exemple sur un site internet ou page d'un réseau social relatif à l'évènement. Les données multimédia peuvent aussi inclure pour l'utilisateur requérant la génération du document multimédia personnalisé des données de géolocalisation (couple temps, position) relative à l'évènement.

La source de référence peut être fixée, par défaut, comme étant soit un dispositif, tel que le terminal mobile, un périphérique de capture, etc., de l'utilisateur requérant la génération du document multimédia personnalisé, soit une source officielle de donnée multimédia (organisateur de l'évènement, photographe officiel, etc.), soit déterminé parmi ces deux types de sources en fonction du volume de données multimédia fournies par l'utilisateur requérant, soit paramétré par l'utilisateur requérant.

Dans le cas ou la source de référence est déterminé en fonction du volume de données multimédia fournies par l'utilisateur requérant cela permet lorsque l'utilisateur requérant participant a un festival de musique a notamment pris peu de photos ou vidéos mais été spectateur de plusieurs concerts de pouvoir généré un document multimédia personnalisé en fonction de son parcours pendant le festival de musique en s'appuyant sur des photos ou vidéos officielles comme données multimédias d'une source de référence.

En particulier, le procédé de génération comporte, un calcul de distance composite *dist_calc* soit préalablement à la sélection comme illustrée par la figure 2, soit intégrée dans la sélection *select* (non illustré).

Le procédé de génération comporte, notamment, une réception *m_Id* de données multimédia en provenance de plusieurs sources S₁... S_{J} incluse par exemple dans un téléchargement ou récupération (upload en anglais) par un dispositif de génération de documents multimédia à partir de ces sources, ou une transmission (dowInload) des sources vers un dispositif de génération de documents multimédia. Le téléchargement des données multimédia des différentes sources par le dispositif de génération de document multimédia intégré ou par un dispositif de fourniture de service lié à l'évènement permet à ce dispositif de partager l'ensemble de ces données multimédias avec l'ensemble des participants à l'évènement notamment par génération de documents multimédias personnalisé utilisant les données multimédias provenant de ces différentes sources. Les sources de données multimédia sont notamment des terminaux de communication, des périphériques de captures, des bases de données multimédias...

En particulier, le procédé de génération comporte un ajout d'un identifiant de la source d'une donnée multimédia dans ladite donnée multimédia *s_add.* Cet ajout est notamment effectué par le dispositif récupérant les données multimédias des différentes sources (soit le dispositif de génération de documents multimédia, soit le dispositif de fourniture de service). Ainsi, à n'importe quel stade de la génération du document, le procédé de génération peut traiter de manière distincte des données multimédia de sources distinctes notamment pour la sélection de données multimédia provenant de sources autre que la source de référence, pour déterminer la distance composite lors de cette sélection, mais aussi pour positionner de manière distinctes les données multimédias dans le document multimédia en fonction de la source. La mise en valeur des données multimédia appartenant à l'utilisateur requérant dans le document multimédia est alors permise par cette distinction de la provenance des données multimédia.

En particulier, la source de référence peut être déterminée *ref_det* parmi les sources de données multimédias disponibles sur un évènement par le procédé de génération de document multimédia notamment comme un des terminaux ou périphériques de l'utilisateur requérant. La détermination de la source de référence permet de séparer les données multimédia de référence {m__{R}} de l'ensemble des données multimédia [m_j}j reçues. Ainsi, la sélection *select* des données multimédia provenant des sources autres que la source de référence peut être effectué en relation avec les données multimédia de référence, à savoir en fonction de la distance composite de ces données multimédia relativement à l'une des données multimédia de référence.

Eventuellement, une présélection *preslct* de données multimédia de référence peut être effectuée préalablement à la sélection *select* des données multimédia des autres sources. La présélection est notamment fonction du volume de données multimédia de référence et/ou de la taille du document multimédia personnalisé et/ou de la taille d'une série de données multimédia du document personnalisé.

En particulier, le procédé de génération comporte, préalablement à la sélection, une identification de contextes *ctxt_id* dudit évènement à partir d'informations de contexte fournies par une desdites sources, aussi appelées source de contexte, par exemple une base de données multimédia de l'organisateur de l'évènement ou une source officielle de l'évènement. Chaque donnée multimédia est notamment contextualisée en fonction des informations de contexte (notamment, dans le cadre d'un festival de musique, nom d'artiste, nom de scène, horaires de début et/ou de fin d'un concert, etc.) disponibles auprès de cette source et des informations déjà associés (par exemple sous forme de métadonnées incluant ou non la distance composite) à cette donnée multimédia. Dans notre exemple, à chaque changement de scène correspond un nouveau contexte, ainsi les informations associées à une donnée multimédia de l'utilisateur requérant permettront d'associer un contexte différent de celui de la donnée multimédia précédente de l'utilisateur requérant.

Ainsi, la récupération s_srch d'élement sonore est éventuellement fonction d'une ou plusieurs d'informations de contexte *ctxt_inf* associées aux données multimédia sélectionnées {m_p_{q}} pour le document multimédia personnalisé m_doc, la ou les informations de contexte associées constituant alors la première information de contexte *ctxt_inf1.*

De même la sélection *s_select* d'une adresse de streaming audio (non illustré sur la figure 2) est éventuellement fonction d'une ou plusieurs d'informations de contexte *ctxt_inf* associées aux données multimédia sélectionnées {m_p_{q}} pour le document multimédia personnalisé m_doc, la ou les informations de contexte associées constituant alors la deuxième information de contexte *ctxt_inf2.*

En particulier, pour chaque donnée multimédia de référence, un ajout *m_doc_add* dans le document multimédia d'un format de présentation, notamment d'une matrice de dimension n, comportant au moins ladite donnée multimédia de la source de référence à une position prédéterminée dans ladite matrice pour ledit document multimédia personnalisé, et les autres données multimédia sélectionnées relativement à cette donnée multimédia de la source de référence. La position dans la matrice des données multimédia sélectionnées est, notamment, fonction de la distance composite. Ainsi, si la donnée multimédia de référence est placée au centre de la matrice, les autres données multimédia sont placés par ordre de distance composite croissante, par exemple : par cercle concentrique autour de la donnée multimédia de référence et/ou sur une spirale commençant directement à gauche de la donnée multimédia de référence dans la matrice...

En particulier, préalablement à la sélection, le procédé de génération de documents multimédia personnalisés comporte un ajout (non illustré) à chaque donnée multimédia d'une information concernant la source de ladite donnée multimédia. Ainsi, la distance composite peut inclure une distance fonction de relation entre la source S_{J} de la donnée multimédia m_j,i et la source de référence S_{R} de la donnée multimédia de référence m_R : notamment la distance sociale.

Ainsi, notamment, la position des données multimédia de référence dans le document multimédia peuvent être prédéterminée permettant notamment une mise en valeur de ces données multimédia de référence lors de la reproduction du document multimédia personnalisé.

En particulier, le procédé de génération de document comporte une insertion d'au moins une information de contexte dans ledit document multimédia en fonction des informations de contextes de deux données multimédia de référence voisines dans ledit document multimédia personnalisé. Ainsi, lorsque deux données multimédias de référence voisine dans le document multimédia personnalisé ne comporte pas les mêmes informations de contexte, les informations de contexte de la données multimédia de référence suivante parmi des deux données multimédia de référence voisines sont insérées dans le document multimédia personnalisé soit à une position intermédiaire entre les deux données multimédia de référence voisines, soit à une position dans le document multimédia fonction de la position de la position de la données multimédia de référence suivante. Ainsi, les informations de contexte de part leur position dans le document multimédia permettent de délimiter chaque série.

L'insertion des informations de contexte offre à l'utilisateur requérant la possibilité de générer un document multimédia personnalisé dans lequel s'ajoute automatiquement des informations permettant de recontextualiser les données multimédias. Les informations de contextes peuvent être relatives au moment, lieu ou tout autre type d'informations connus de la source de contexte et rattachées à une ou plusieurs données multimédias sélectionnées. Plusieurs données multimédias d'un même contexte constituent une série qui comporte un début et une fin correspondant à chaque changement de contexte. La granularité et le choix des informations de contexte insérés peuvent être paramétrés en fonction de la taille de la série (à savoir le nombre de données multimédias sélectionnées par série).

Dans le cas de la génération d'un document multimédia relatif à des données multimédia générés pendant un festival de musique, l'insertion du nom de la scène est rendu possible grâce à cette connaissance des informations de contexte : liste des noms de scènes et coordonnées GPS respectives, par la base de données multimédia officielle du festival, L'insertion du nom et de la photo de l'artiste par exemple seront possible dès lors que la base de données multimédia officielle comporte dans les informations de contexte : une table de programmation dans laquelle figure les horaires associés à chaque artiste ainsi qu'une photo de contexte.

En particulier, le document sonore personnalisé s_doc est ajouté ⊕ au document multimédia personnalisé m_doc pour générer le document multimédia personnalisé sonorisé m_doc*, ou les adresses de streaming audio sont introduits comme données multimédias lors d'un ajout *m_doc_add* dans le document multimédia m_doc* d'un format de présentation (non illustré).

En particulier, le nombre de données multimédia sélectionné et/ou le nombre d'adresses de streaming audio récupérées ou sélectionné est fonction de la durée de reproduction de la série. Le ration de la durée de reproduction de la série par rapport à la durée de reproduction du document multimédia personnalisé est notamment fonction du ratio de temps passé par l'utilisateur requérant dans le contexte λ de la série se_{λ} par rapport au temps qu'il a consacré à l'évènement.

Un mode de réalisation du procédé est un programme comprenant des instructions de code de programme pour l'exécution des étapes du procédé de génération d'un document multimédia personnalisé sonorisé lorsque ledit programme est exécuté par un processeur.

L'invention vise aussi un support. Le support d'informations peut être n'importe quelle entité ou dispositif capable de stocker au moins l'un de ces programmes. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

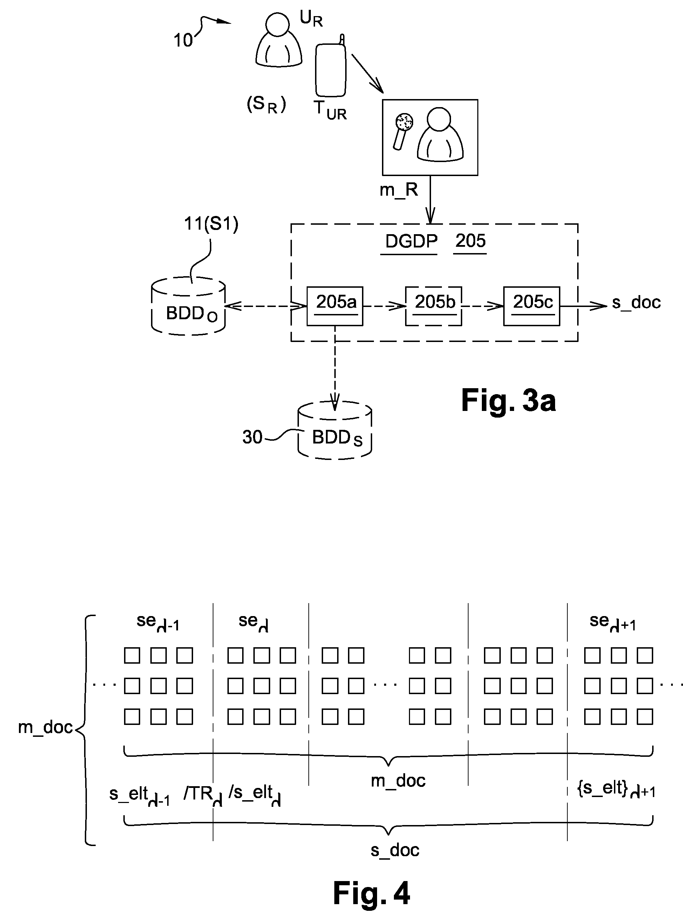

La figure 3a illustre un schéma simplifié d'une architecture réseau comportant un dispositif de génération de document sonore personnalisé selon l'invention.

Un utilisateur U_{R} capture une donnée multimédia m__{R} lors d'un évènement au moyen de son terminal mobile T_{UR} constituant dans l'exemple illustré par la figure 3a une source de référence S_{R}.

L'organisateur de l'évènement met à disposition des participants d'autres données multimédias {m1i} dans une base de données multimédia officielles BDD_{O} constituant une autre source S₁.

L'utilisateur UR requiert la génération d'un document sonore personnalisé à un dispositif de génération de documents sonores DGSP 205.

Le dispositif de génération d'un document sonore personnalisé 205 relatif à un évènement comporte
- un récupérateur 205a, pour chaque série de donnée multimédia, d'au moins une adresse de streaming audio en fonction d'au moins une première information de contexte associée à une série de données multimédia d'un utilisateur requérant ladite génération d'un document sonore, et
- un mixeur 205c dudit adresses de streaming audio récupérées , ledit mixeur fournissant ledit document sonore personnalisé.

Notamment, un générateur (non illustré) automatique de liste de lecture d'éléments sonores comporte le dispositif de de génération 205 de document sonore personnalisé. Le document sonore personnalisé constitue alors la liste de lecture d'éléments sonores qui comporte au moins une liste des adresses de streaming audio récupérées

Le récupérateur 205a récupère les éléments sonores auprès de la base de données de contexte BDD_{O} de la source S1 11, et/ou auprès de base de données d'éléments sonores BDD_{S} de dispositif de fourniture de services tels que des fournisseurs de services musicaux 30.

En particulier, le dispositif de génération de document sonore 205b comporte un sélecteur, pour au moins une série, d'au moins une adresse de streaming audio parmi les adresses de streaming audio récupérés.

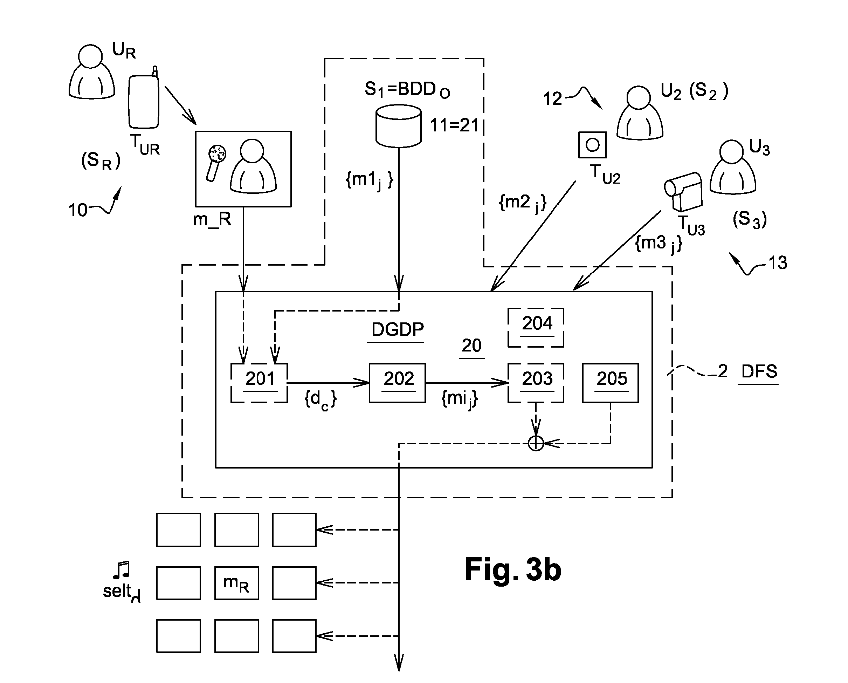

La figure 3b illustre un schéma simplifié d'une architecture réseau comportant un dispositif de génération de document multimédia personnalisé sonorisé selon l'invention.

Un utilisateur U_{R} capture une donnée multimédia m__{R} lors d'un évènement au moyen de son terminal mobile T_{UR} constituant dans l'exemple illustré par la figure 3 une source de référence S_{R}.

L'organisateur de l'évènement met à disposition des participants d'autres données multimédias {m1i} dans une base de données multimédia officielles BDD_{O} constituant une autre source S₁

D'autres participants U2, U3 au même évènement génère aussi des données multimédia, respectivement {m_2i}, {m_3i}, au moyen de périphériques de captures et/ou de terminaux de communication respectivement T_{U2}, T_{U3}, constituant respectivement les sources S₂ et S₃.

L'utilisateur UR requiert la génération d'un document multimédia personnalisé à un dispositif de génération de documents DGDP 20.

Le dispositif de génération de documents multimédia personnalisés relatif à un évènement à partir de données multimédia de plusieurs sources S1, S2, S3, SR, comporte un sélecteur 202 de données multimédia en fonction d'une distance composite associée auxdites données multimédia, ladite distance composite étant relative à au moins une donnée multimédia d'une source de référence et fonction de plusieurs distances de type différents.

En particulier, ledit dispositif de génération comporte un ou plusieurs des éléments suivants:
- un identificateur de contexte 204, permettant d'insérer dans les données multimédia au moins une information de contexte fournie par une desdites sources,
- un calculateur de distance composite 201, fournissant la distance composite au sélecteur pour la sélection des données multimédias,

- un générateur de matrice de données multimédia 203, générant une matrice dans laquelle les données multimédia fournies par le sélecteur sont positionnés dans le document multimédia,
- un dispositif de génération de piste sonore personnalisée 205 générant un document sonore personnalisé en fonction d'une première information de contexte provenant éventuellement de l'identificateur de contexte 204

Dans une variante de réalisation un dispositif de fourniture de service DFS 2 comporte une source de données multimédia S₁ concernant un évènement donné, et un dispositif de génération 20 de documents multimédia personnalisés.

En particulier, le dispositif de fourniture de service 2 comporte en outre un ou plusieurs des éléments suivants :
- une base d'informations de contexte concernant ledit événement (non illustrée),
- un espace de partage de données multimédia de plusieurs utilisateur, ledit espace de partage étant dédié audit évènement,

Dans l'exemple illustré par la figure 3, le générateur de matrice 203 positionne la donnée multimédia de référence m__{R} de l'utilisateur requérant UR au centre d'une matrice de données multimédia de dimension 3, et les 8 données multimédia sélectionnés par le sélecteur 202 comme les plus proche de cette données multimédia de référence parmi l'ensemble des données multimédia récupérées des autres sources S1, S2 et S3 autour de cette donnée multimédia de référence dans cette matrice dans le document multimédia.

L'opération pourra être répétée pour chaque donnée multimédia de référence récupérée, avec éventuellement une insertion d'au moins une information de contexte entre deux matrices ou avec une matrice comportant une données multimédia de référence concernant un nouveau contexte grâce à un délimiteur de contexte (non illustré) du dispositif de génération 20.

Et, dans cet exemple, le dispositif de génération de piste sonore 205 positionne le début de lecture de l'adresse de streaming audio s_eltλ, avec la lecture de la matrice générée par le générateur 203, cette matrice comportant la première donnée multimédia m__{R} de la série se_{λ}. L'opération pourra être répétée pour chaque série.

Dans notre exemple, le document multimédia généré se compose de matrices de données multimédia de dimension 3 ordonnées temporellement. La donnée multimédia de référence est une donnée multimédia dont la source est l'utilisateur requérant la génération du document multimédia personnalisé. La génération du document multimédia a positionné les données multimédia de référence au centre de chaque matrice du document multimédia.

La figure 4 illustre un exemple de document multimédia personnalisé sonorisé selon l'invention.

Le document sonore personnalisé s_doc généré selon l'invention se décompose en série ... se_{λ-1}, se_{λ}, se_{λ+1}... Dans chaque série, un ou plusieurs adresses de streaming audio sont mixés : respectivement s_elt_{λ-1}, s_elt_{λ-1}, {s_elt_{=λ+1}... Eventuellement une transition sonore tr_{λ} tel qu'un jingle musical délimite au moins une des extrémités (le début dans notre figure) d'une série se_{λ}.

Le document multimédia personnalisé sonorisé m_doc* généré selon l'invention se décompose en série ... se_{λ-1}, se_{λ}, se_{λ+1} ... Dans chaque série, les données multimédia provenant de plusieurs sources sont mises en forme par exemple sous forme matricielle pour constituer un document personnalisé multimédia m_doc. Le document multidémia personnalisé sonorisé est constitué soit par l'ensemble des documents multimédia personnalisé m_doc et sonore personnalisé s_doc, soit par l'ajout sous une mise en forme notamment sous la forme de matrices sonorisées des données multimédia et de l'adresse de streaming audio .

Ainsi, dans notre deuxième exemple, la vitesse de lecture d'une matrice est fonction de la durée de l'adresse de streaming audio associé notamment de la durée de l'adresse de streaming audio associé. Par exemple pour la série se_{λ}, l'adresse de streaming audio complet est une chanson dont le premier couplet est ajouté dans la mise en forme sous la forme de la première matrice de cette série, le refrain dans la mise en forme sous la forme de la deuxième matrice de cette même série, le deuxième couplet dans la mise en forme sous la forme de la deuxième matrice de cette même série, etc.

Afin d'éviter un blanc, notamment lorsque la durée de lecture des données multimédia d'une série est supérieure à la durée du ou de l'ensemble des adresses de streaming audio sélectionnés pour cette série, le mixage prévoit notamment la relecture de cet adresse de streaming audio . De manière alternative, pour éviter un blanc, la récupération et/ou sélection renvoie un grand nombre d'adresses de streaming audio permettant le mixage de tout ou partie contenus fournis par des adresses de streaming audio sélectionnés en fonction de la durée de lecture des données multimédia. Les adresses de streaming audio sont, alors, mixés soit dans un ordre aléatoire soit en fonction d'un ordre donné par la récupération et/ou la sélection.

L'ajout d'un document sonore ou bande sonore contextuelle, c'est-à-dire fonction d'une information de contexte, permet à l'utilisateur requérant de générer un document multimédia personnalisé dans lequel la bande son correspondant au déroulement de l'évènement est automatiquement intégrée. L'enchainement des adresses de streaming audio est automatisé selon des paramètres de mixage définissable en amont du processus notamment mode et vitesse de transition d'une adresse de streaming audio à l'adresse de streaming audio suivant.

L'invention permet ainsi à un participant d'un festival de musique de se constituer facilement sa propre bande son en fonction de son vécu de ce festival de musique, notamment en ne comportant des musiques que des artistes qu'il est allé voir durant le festival ou uniquement des chansons pour lesquelles il a émis un avis positif soit par un message notamment un tweet soit par une indication de recommandation sur un réseau social ou sur le site du festival, etc., et éventuellement en fonction du temps qu'il a passé à chaque concert.

## Revendications

1. Procédé de génération, sur requête d'un utilisateur, d'un document sonore personnalisé relatif à un évènement lors duquel une série de données multimédia est générée pour ledit utilisateur, le procédé de génération comportant
• Une récupération, pour chaque données multimédia de la série de données multimédia dudit utilisateur requérant ladite génération d'un document sonore personnalisé, d'au moins une adresse de streaming audio en fonction d'au moins une première information de contexte associée à ladite série de données multimédia , et
• Un mixage desdites adresses de streaming audio récupérées, ledit mixage , ledit mixage fournissant ledit document sonore personnalisé.

2. Procédé de génération selon la revendication précédente, **caractérisé en ce que** ledit document sonore constitue une liste de lecture d'éléments sonores, ladite liste de lecture comportant au moins une liste des adresses de streaming audio récupérées.

3. Procédé de génération d'un document sonore personnalisé selon l'une quelconque des revendications précédentes **caractérisé en ce que** ladite première information de contexte est identifiée en fonction d'au moins une donnée multimédia dudit utilisateur requérant, ladite première information de contexte est associée à des données multimédia de l'utilisateur requérant, les données multimédia associée à une même première information de contexte constituant une série.

4. Procédé de génération d'un document sonore personnalisé selon la revendication précédente **caractérisé en ce que** l'identification de la première information de contexte comporte une reconnaissance d'information de contexte dans ladite donnée multimédia.

5. Procédé de génération d'un document sonore personnalisé selon l'une quelconque des revendications précédentes **caractérisé en ce que** la récupération d'une adresse de streaming audio est effectué dans les informations de contexte associées à la dite série et fournies par une source de données multimédia.

6. Procédé de génération d'un document sonore personnalisé selon l'une quelconque des revendications précédentes **caractérisé en ce que** la récupération d'une adresse de streaming audio est effectué dans une base de données d'adresses de streaming audio .

7. Procédé de génération d'un document sonore personnalisé selon l'une quelconque des revendications précédentes **caractérisé en ce que** le procédé de génération comporte, préalablement au mixage, une sélection, pour au moins une série, d'au moins une adresse de streaming audio parmi les adresses de streaming audio récupérés.

8. Programme comprenant des instructions de code de programme pour l'exécution des étapes du procédé de génération d'un document sonore personnalisé selon l'une quelconque des revendications précédentes lorsque ledit programme est exécuté par un processeur.

9. Procédé de génération d'un document multimédia personnalisé sonorisé relatif à un évènement à partir de données multimédia de plusieurs sources, comportant une génération d'une bande sonore dudit document multimédia personnalisé selon l'une quelconque des revendications 1 à 8.

10. Procédé de génération d'un document multimédia personnalisés sonorisé selon la revendication précédente, comportant une sélection de données multimédia concernant ledit évènement en fonction d'une distance composite associée auxdites données multimédia, ladite distance composite étant relative à au moins une donnée multimédia d'une source de référence et fonction de plusieurs distances de type différents.

11. Programme comprenant des instructions de code de programme pour l'exécution des étapes du procédé de génération d'un document multimédia personnalisé sonorisé selon la revendication précédente lorsque ledit programme est exécuté par un processeur.

12. Dispositif de génération d'un document sonore personnalisé relatif à un évènement comportant
• un récupérateur, pour chaque série de donnée multimédia, d'au moins une adresse de streaming audio en fonction d'au moins une première information de contexte associée à une série de données multimédia d'un utilisateur requérant ladite génération d'un document sonore, et
• un mixeur des contenus audio desdites adresses de streaming audio récupérées , ledit mixeur fournissant ledit document sonore personnalisé.

13. Générateur automatique de liste de lecture d'éléments sonores comportant un dispositif de de génération d'un document sonore personnalisé selon la revendication précédente, ledit document sonore personnalisé constituant ladite liste de lecture d'éléments sonores, ladite liste de lecture comportant au moins une liste des adresses de streaming audio récupérées.

14. Dispositif de génération d'un document multimédia personnalisé sonorisé relatif à un évènement à partir de données multimédia de plusieurs sources comportant un dispositif de génération d'un document sonore personnalisé relatif à un évènement selon la revendication précédente.

15. Dispositif de génération d'un document multimédia personnalisé sonorisé selon la revendication précédente **caractérisé en ce que** ledit dispositif de génération de document multimédia comporte un sélecteur de données multimédia en fonction d'une distance *composite* associée auxdites données multimédia, ladite distance *composite* étant relative à au moins une donnée multimédia d'une source de référence et fonction de plusieurs distances de type différents.
